# EUROPÄISCHE PATENTSCHRIFT

(11) **EP 1 424 587 B1**
(45) Veröffentlichungstag und Bekanntmachung des Hinweises auf die Patenterteilung: **14.06.2006**
(21) Anmeldenummer: 03024747.2
(22) Anmeldetag: 29.10.2003
(51) Int. Cl.: G02C 5/22

(54) **Gelenk für Brillenfassungen**
Hinge for spectacles
Charnière pour lunettes

(30) Priorität: 26.11.2002 DE 10255244
(43) Veröffentlichungstag der Anmeldung: 02.06.2004
(73) Patentinhaber: Rodenstock GmbH, 80469 München (DE)
(72) Erfinder: Wandinger, Jakob, 84478 Waldkraiburg (DE)

(56) Entgegenhaltungen:
- EP-A- 0 255 508
- EP-A- 0 384 289
- DE-B- 1 196 397
- US-A- 4 145 124

## Beschreibung

Die Erfindung betrifft ein Gelenk für Brillenfassungen mit einem einlappigen ersten Gelenkteil und einem zweilappigen zweiten Gelenkteil, mit Gelenkbohrungen zur Aufnahme einer Gelenkachse, wobei die Gelenkbohrung im einlappigen ersten Gelenkteil kegelförmig ausgebildet ist und auch die Gelenkachse in einem Teilbereich kegelförmig ausgebildet ist und wobei die Gelenkachse mit ihrem kegelförmigen, eine Gleitfläche bildenden Teilbereich in die kegelförmige Gelenkbohrung des ersten Gelenkteils formschlüssig eingreift.

Es ist allgemein üblich, bei Kunststofffassungen Bügel und Front durch Gelenke zu verbinden, bei denen die Gelenkachse aus einem glatten Stift (siehe Bild 1) oder aus einer Schraube mit zylindrischem Schaft (siehe Bild 2) besteht. Solche Gelenke werden besonders bei Sportbrillen eingesetzt. Diese Art von Gelenk hat den Nachteil, dass sich kein definierter Scharniergang einstellen läßt.

Aus der österreichischen Patentschrift Nr. 386 486 B ist eine Lösung bekannt (siehe Bild 3), bei der eine konusförmige Scharnierachse in einem sich wenigstens über zwei Scharnierlappen erstreckenden Längenbereich formschlüssig in die gegengleichen konusförmigen Scharnierbohrungen eingreift. Nachteilig an dieser Lösung ist, dass die Konusachse mittels eines zusätzlichen Bauteils (z.B. einer Mutter, Schraube oder Feder) in die Scharnierlappenbohrungen hineingezogen werden muss, um den Gangregulierungseffekt zu erzeugen. Abgesehen vom Mehraufwand können sich die verschraubten Bauteile lockern oder ganz verloren gehen und die erwünschte Wirkung damit auch. Desweiteren ist immer eine durchgängige Bohrung erforderlich, was bedeutet, dass die Möglichkeit eines nahezu unsichtbaren Einbaus entfällt.

Der Erfindung liegt die Aufgabe zugrunde, ein ästhetisch ansprechendes Gelenk der eingangs genannten Art anzugeben, bei dem eine dauerhafte Gangregulierung erzielt werden kann ohne dass es eines zusätzlichen Bauteils bedarf, mit dem die Scharnierachse in die Scharnierlappenbohrungen hineingezogen werden muss.

Diese Aufgabe wird erfindungsgemäß dadurch gelöst, dass die Gelenkachse in ihrem Kopfbereich einen Schlitz und ein selbsthemmendes Gewinde aufweist, über das die Gelenkachse in ein entsprechendes Gewinde im einen Lappen des zweiten Gelenkteils eingreift, während der Fuß der Gelenkachse in eine sacklochartige Bohrung im anderen Lappen des zweiten Gelenkteils eingreift, wobei die Selbsthemmung im Gewinde so ausgelegt ist, dass sie stets größer als die größte Reibung zwischen Gelenkachse und einlappigem ersten Gelenkteil ist.

Die Erfindung betrifft somit ein Gelenk für Brillenfassungen, bei dem das Gelenkreibmoment mittels einer einschraubbaren, konischen Gelenkachse in einer dazu passend gefertigten konischen Achsbohrung durch unterschiedlich tiefes Einschrauben eingestellt werden kann. Ein zusätzliches Bauteil, mit dem die Gelenkachse in die konusförmige Scharnierbohrung hineingezogen werden muss ist nicht erforderlich. Zusätzlich ist die Möglichkeit des unsichtbaren Einbaus der Gelenkachse gegeben. Dies ermöglicht eine ästhetisch ansprechende Gestaltung der Brillenfassung.

In einer bevorzugten Ausgestaltung der Erfindung ist das Gelenk ein Kunststoffgelenk, da sich hierbei die Selbsthemmung besonders leicht einstellen läßt.

Im folgenden soll anhand einer Figur ein Ausführungsbeispiel eines erfindungsgemäßen Gelenks beschrieben werden.
Es zeigen:

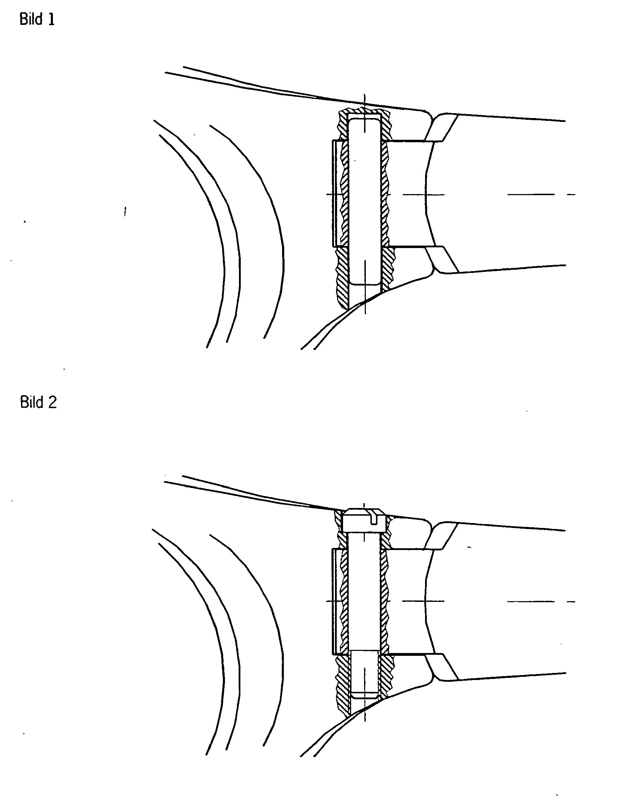

- Figuren 1-3:: Zum Stand der Technik zählende Gelenke für Kunststoff-Brillenfassungen
- Figur 4:: Ein Ausführungsbeispiel eines erfindungsgemäßen Gelenks

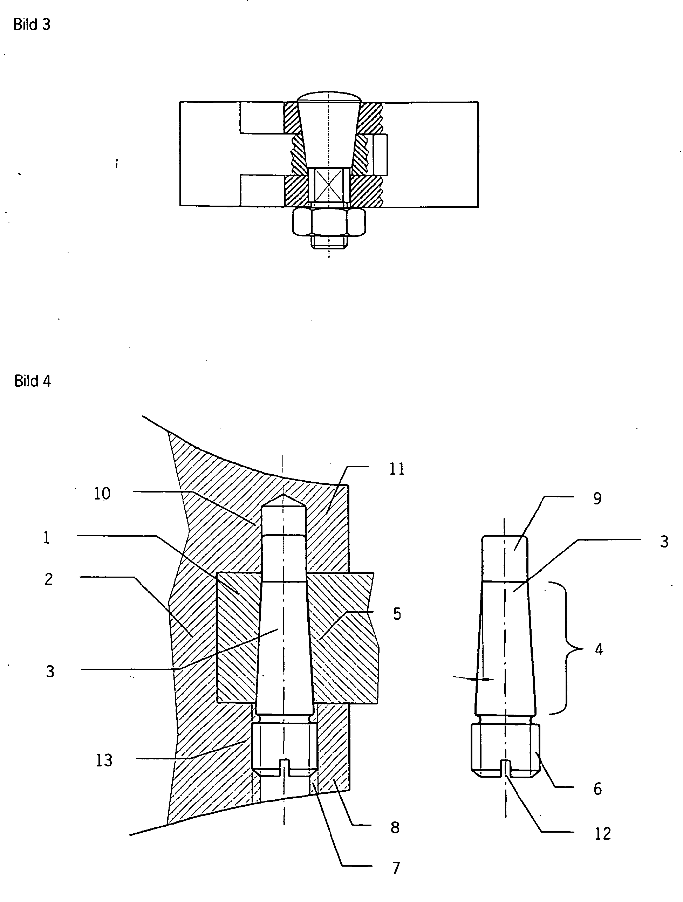

In Figur 4 ist ein Kunststoffgelenk für eine Brillenfassung aus Kunststoff dargestellt. Das Gelenk besteht im wesentliche aus einem ersten einlappigen Gelenkteil 1 und einem zweilappigen zweiten Gelenkteil 2. In den Lappen der Gelenkteile sind Gelenkbohrungen 5, 10, 13 zur Aufnahme einer Gelenkachse 3 vorgesehen. Die Gelenkbohrung 5 im einlappigen ersten Gelenkteil 1 ist kegelförmig ausgebildet. Auch die Gelenkachse 3 ist in einem Teilbereich 4 kegelförmig ausgebildet. Die Gelenkachse 3 greift mit ihrem kegelförmigen, eine Gleitfläche bildenden Teilbereich 4 in die kegelförmige Gelenkbohrung 5 des ersten Gelenkteils 1 formschlüssig ein. Die Gelenkachse 3 weist in ihrem Kopfbereich einen Schlitz 12 und ein selbsthemmendes Gewinde 6 auf, über das die Gelenkachse 3 in ein entsprechendes Gewinde 7 im einen Lappen 8 des zweiten Gelenkteils 2 eingreift. Der Fuß 9 der Gelenkachse 3 greift in eine sacklochartige Bohrung 10 im anderen Lappen 11 des zweiten Gelenkteils 2 ein. Die Selbsthemmung im Gewinde 6,7 ist so ausgelegt ist, dass sie stets größer als die größte Reibung zwischen Gelenkachse 3 und einlappigem ersten Gelenkteil 1 ist.

Erfindungsgemäß wird die Einstellbarkeit des Gelenkreibmoments durch mehr oder weniger tiefes Einschrauben der Gelenkachse 4 in die entsprechend konisch ausgebildete Gelenkbohrung 5 der einlappigen Gelenkhälfte erreicht. Die Gelenkachse kann über Schlitz 12 mit Hilfe eines Schraubendrehers angezogen oder gelöst werden. Entsprechend vergrößert oder verringert sich das Reibmoment zwischen Achse und einlappiger Gelenkhälfte. Durch die mit selbsthemmendem Gewinde versehene konische Achse wird also mit nur einem Bauteil gleichzeitig ein einstellbarer Scharniergang und eine wirksame Sicherung gegen unbeabsichtigtes Losdrehen bzw. Verlieren der Gelenkachse erreicht. Ein weiterer Vorteil ist, dass die Lösung keine Durchgangsbohrung erfordert, damit weniger auffällt und eine wesentlich freiere Gestaltung ermöglicht.

## Patentansprüche

1. Gelenk für Brillenfassungen mit einem einlappigen ersten Gelenkteil (1) und einem zweilappigen zweiten Gelenkteil (2), mit Gelenkbohrungen (5, 10, 13) zur Aufnahme einer Gelenkachse (3), wobei die Gelenkbohrung (5) im einlappigen ersten Gelenkteil (1) kegelförmig ausgebildet ist und auch die Gelenkachse (3) in einem Teilbereich (4) kegelförmig ausgebildet ist und die Gelenkachse (3) mit ihrem kegelförmigen, eine Gleitfläche bildenden Teilbereich (4) in die kegelförmige Gelenkbohrung (5) des ersten Gelenkteils (1) formschlüssig eingreift, **dadurch gekennzeichnet, dass** die Gelenkachse (3) in ihrem Kopfbereich einen Schlitz (12) und ein selbsthemmendes Gewinde (6) aufweist, über das die Gelenkachse (3) in ein entsprechendes Gewinde (7) im einen Lappen (8) des zweiten Gelenkteils (2) eingreift, während der Fuß (9) der Gelenkachse (3) in eine sacklochartige Bohrung (10) im anderen Lappen (11) des zweiten Gelenkteils (2) eingreift, wobei die Selbsthemmung im Gewinde (6,7) so ausgelegt ist, dass sie stets größer als die größte Reibung zwischen Gelenkachse (3) und einlappigem ersten Gelenkteil (1) ist.

2. Gelenk nach der Anspruch 1, **dadurch gekennzeichnet, dass** das Gelenk ein Kunststoffgelenk ist.

## Claims

1. Hinge for spectacle frames having a one-tabbed first hinge part (1) and a two-tabbed second hinge part (2), with hinge borings (5, 10, 13) for receiving a hinge pin (3), the hinge boring (5) having a tapered configuration in the one-tabbed first hinge part (1) and also the hinge pin (3) having a tapered configuration in a partial region (4) and the hinge pin (3) engaging with its partial region (4), which is tapered and forms a sliding face, in a form-fitting manner in the tapered hinge boring (5) of the first hinge part (1), **characterised in that**, in its head region, the hinge pin (3) has a slot (12) and a self-locking thread (6), via which the hinge pin (3) engages in a corresponding thread (7) in one tab (8) of the second hinge part (2), whilst the foot (9) of the hinge pin (3) engages in a boring (10) of the blind hole type in the other tab (11) of the second hinge part (2), the self-locking effect in the thread (6, 7) being designed such that it is always greater than the greatest friction between hinge pin (3) and one-tabbed first hinge part (1).

2. Hinge according to claim 1, **characterised in that** the hinge is a plastic material hinge.

## Revendications

1. Charnière pour montures de lunettes dotée d'une première partie de charnière à une patte (1) et d'une seconde partie de charnière à deux pattes (2), comprenant des alésages de charnière (5, 10, 13) destinés à recevoir un axe de charnière (3), l'alésage de charnière (5) dans la première partie de charnière à une patte (1) étant conçue de façon conique et l'axe de charnière (3) étant conçu également de façon conique dans une zone partielle (4) et l'axe de charnière (3) se mettant en prise par coopération de forme avec sa zone partielle (4) conique, formant une surface de glissement, dans l'alésage de charnière (5) conique de la première partie de charnière (1), **caractérisée en ce que** l'axe de charnière (3) comprend dans sa zone de tête une fente (12) et un filet autobloquant (6), par l'intermédiaire duquel l'axe de charnière (3) se met en prise dans un filet (7) correspondant dans une patte (8) de la seconde partie de charnière (2), tandis que le pied (9) de l'axe de charnière (3) se met en prise dans un alésage en forme de trou borgne (10) dans l'autre patte (11) de la seconde partie de charnière (2), le blocage automatique dans le filet (6, 7) étant dimensionné de sorte qu'il est constamment plus grand que le plus grand frottement entre l'axe de charnière (3) et la première partie de charnière à une patte (1).

2. Charnière selon la revendication 1, **caractérisée en ce que** la charnière est une charnière en matière plastique.
